# EUROPÄISCHE PATENTSCHRIFT

(11) **EP 0 671 797 B1**
(45) Veröffentlichungstag und Bekanntmachung des Hinweises auf die Patenterteilung: **09.09.1998**
(21) Anmeldenummer: 95102808.3
(22) Anmeldetag: 28.02.1995
(51) Int. Cl.: H02G 3/08

(54) **Elektrisches Installationsgerät**
Electrical installation apparatus
Appareil pour installation électrique

(30) Priorität: 07.03.1994 DE 9403786 U
(43) Veröffentlichungstag der Anmeldung: 13.09.1995
(73) Patentinhaber: Gustav Hensel GmbH & Co. KG, 57368 Lennestadt (DE)
(72) Erfinder: Müller, Otmar, D-57368 Lennestadt (DE); Trapp, Erich, D-57368 Lennestadt (DE); Budde, Gerhard, D-57368 Lennestadt (DE); Adler, Jürgen, D-57392 Schmallenberg (DE); Cater, Rudolf, D-57392 Schmallenberg (DE)
(74) Vertreter: Ludewig, Karlheinrich, Dipl.-Ing.

(56) Entgegenhaltungen:
- DE-A- 2 557 330
- DE-B- 1 095 913
- DE-U- 9 005 252
- FR-A- 2 126 194

## Beschreibung

Die Erfindung betrifft ein elektrisches Installationsgerät, insbesondere Automatenkasten, Sicherungskasten, Kleinverteilerkasten und/oder dgl., mit einem kastenförmigen ein Oberteil und ein Unterteil aufweisendes Gehäuse, das in seinem Kasteninneren zur Halterung von Sicherungen, Automaten, Schaltgeräten und/oder dgl. Trageschienen aufweist, mit im Gerätegehäuseinneren vorgesehenen Anschlußklemmenleisten, mit an wenigstens einer Stirnseite des Gehäuses vorgesehenen Kabeleinführungen, durch die anzuschließende Kabel in das Gehäuseinnere führbar sind. Derlei Geräte werden wegen ihrer leichten Montage gerne verwendet, darüber hinaus sind die anzuschließenden Kabel sowie die Sicherungen und Automaten leicht anzusetzen. Von Nachteil ist, daß das Rangieren und Einführen der Kabel, selbst wenn diese in Kabelkanäle oder Installationsrohren verlegt sind, ein unschönes Aussehen ergibt.

In der FR-A-2 126 194 ist eine Kabeleinführungsplatte gezeigt mit Öffnungen, die durch eine Dichtungsmenbran verschlossen sind. Der Träger ist vollständig von dem Dichtungsmaterial umgeben. Bei einem Ausführungsbeispiel ist zusätzlich noch eine Dichttülle vorgesehen. Diese Druckschrift zeigt jedoch kein Installationsgehäuse. Demgemäß ist nicht gezeigt, wie die Kabel verlegt wurden.

In der Druckschrift DE-B-10 95 913 ist ein Gehäuse gezeigt. Dieses Gehäuse weist einen kleinen Aufnahmeraum auf, der offen gestaltet ist. Dieser Aufnahmeraum ist jedoch relativ klein gestaltet, so dass etwaige herangeführte Kabel immer noch ein unschönes Aussehen ergeben.

In der DE-U 19 05 252 ist ein Installationsgerät etwa gemäß dem Oberbegriff der vorliegenden Erfindung vorgesehen. Aber auch diese Druckschrift zeigt keine Anordnung zur Heranführung von Zuleitungen und Kabel.

Aufgabe der Erfindung ist es daher, Geräte der eingangs genannten Art so auszubilden, daß die Installation und/oder die Heranführung der Kabel in Installationsrohren und/oder Kabelkanäle den optischen Eindruck der Geräte nicht verschlechtert. Darüber hinaus soll eine zeitsparende Herstellung und Montage gegeben sein. Diese Aufgabe wird erfindungsgemäß dadurch gelöst, daß im Bereich der Kabeleinführungen ein nach der Seite der heranzuführenden Kabel offener Aufnahmeraum am Gehäuse vorgesehen ist, der zum Gehäuseinneren durch eine Platte mit Kabeleinführungsdichtungen verschlossen ist, daß die Kabeleinführungsdichtungen aus einem weichen elastischen Kunststoff, während die Trägerplatte selber aus einem harten aufgebaut ist, daß die Kabeleinführungsdichtungen von beiden Seiten der Platten um eine Durchgangsöffnung in der Platte angespritzt sind und dass der Aufnahmeraum in Draufsicht auf das Installationsgerät gesehen unterhalb der Anschlußklemmenleiste angeordnet ist. Durch die Verwendung eines Teiles des kastenförmigen Gehäuses zur Aufnahme der Kabel bzw. Kanäle ergibt sich eine leichte Montage und optisch ein wohlfeiles Aussehen, darüber hinaus wird sichergestellt, daß durch die Verwendung eines Teiles des kastenförmigen Gehäuses das Installationsgerät zur Unterbringung von Kabeln, Kabelkanäle und/oder Installationsrohren selber nicht größer wird.

Die aus weichem elastischem Kunststoff bestehenden Dichtungen können sich leicht an die einzelnen Kabel anschmiegen, trotzdem ist über die Platte aus hartem Kunststoff ein fester Halt der Dichtungen mit den Kabeln gegeben. Durch das beidseitige Umspritzen wird sichergestellt, daß beim Einschieben der anzuschließen Kabel die Dichtung selber an der Platte gehaltert bleibt, dadurch, dass der Aufnahmeraum in Draufsicht auf das Installationsgerät unterhalb der Anschlußklemmen angeordnet ist, können die herangeführten einzelnen Kabel leicht verdrahtet werden. Um den nach der Kabelseite hin offenen Aufnahmeraum noch zu vergrößern, empfiehlt es sich, daß ein zusätzliches Abdeckteil den Aufnahmeraum verlängert. Hierbei ragt empfehlenswerterweise das zusätzliche Abdeckteil bereichsweise in den Aufnahmeraum hinein, um so die Einheitlichkeit des Gehäuses noch besser unterstreichen zu können und um weiterhin leicht die in Kabelkanäle oder Installationsrohren geführten Kabel ohne Sichtbarwerdung nach nach außen abdecken zu können. Zur besseren Halterung des Zusatzabdeckteiles sowie zur Abdichtung empfiehlt es sich, seitlich das Zusatzabdeckteil an das Gehäuse mit anliegenden Lappen angreifen zu lassen. Durch diese Lappen entsteht eine U-förmige Aufnahme für die Kabel, so daß sie sicher zum Installationsgerät gelenkt werden können. Empfehlenswerterweise weist das Zusatzabdeckteil zur Seite der heranzuführenden Kabel für deren Kabelkanäle oder Installationsrohre herausbrechbare Teile auf, zu deren bereichsweisen Einfuhr in das Zusatzabdeckteil und zum Schutz, daß keine Verunreinigungen zu dem Aufnahmeraum des Installationsgerätes gelangen könne.

Um das Zusatzabdeckteil leicht haltern zu können, ist es mittels einer Rastverbindung am Installationsgehäuse festlegbar.

Bei einem besonderen Ausführungsbeispiel der Erfindung ist die Platte mit den Kabeleinführungsdichtungen durch eine Rastverbindung abdichtend im Installationsgerätegehäuseinneren befestigbar. Auf diese Weise wird ein sicherer Schutz gegen Eindringen von Verunreinigungen wie Staub und Feuchtigkeit in das kastenförmige Gehäuseinnere erzielt, selbst dann, wenn die einzelnen Kabel bereits angeschlossen sind. Hierbei empfiehlt es sich, daß die Rastverbindung zur Halterung der Kabeleinführungsplatte am Installationsgehäuse aus einer Vielzahl von Rasten und Gegenrasten aufgebaut ist, hierbei sind die Rasten bzw. die Gegenrasten am Rande der abzudichtenden Gehäuseöffnung bzw. der Platte angeordnet. Auf diese Weise kann die Platte gleichmäßig gegen das Gehäuse anliegen. Die Dichtung zwischen Platte und Gehäuse ist gleichmäßig belastet. Eine sichere Abdichtung ist gewährleistet.

Besonders günstig ist es hierbei, wenn die beiden Seiten der Kabeleinführungsdichtung über durch die Platte hindurchgehende Stege aus weichem Material miteinander verbunden sind, da auf diese Weise zum einen ein sicherer Halt der Kabeleinführungsdichtung erzielt wird, zum anderen kann beim Spritzgußvorgang von einer Seite der Platte her die Spritzmasse für die Kabeleinführungsdichtung herangeführt werden, so daß die Herstellung vereinfacht wird. Hierbei empfiehlt es sich, wenn die Stege ringartig in Draufsicht auf die Kabeleinführungsöffnung vorgesehen sind, um eine sichere Halterung der Kabeleinführungsdichtung an der Platte zu gewährleisten.

Bei einem besonderen Ausführungsbeispiel ist die Kabeleinführungsdichtung stutzenartig ausgebildet. Hierbei weist der Stutzen auf der einen Seite eine Dichtmembrane und auf der anderen Seite der Platte ein Führungsteil auf, wobei das Führungsteil zur Halterung und Ausrichtung von einem anzuschließenden Kabel ausgebildet ist, hierbei weist das Führungsteil im Abstand von der Dichtmembrane liegende Werkstoffbereiche auf, die an dem Kabelmantel des Kabels angreifen. Durch den Abstand zwischen Dichtmembrane und Kabelführungsteil wird sichergestellt, daß das anzuschließende Kabel bezüglich der Dichtmembrane genau gehaltert wird und somit eine sichere und höhere Abdichtung als die bekannten Ausführungen erzielt wird. Mit einer solchen Abdichtung können leicht Abdichtungen nach Schutzklasse JP 65 erzielt werden. Hierbei ist die Dichtmembrane auf der Seite angeordnet, auf der die Kabel zum Installationsgerät geführt werden. Vorteilhaft ist es bei dieser Ausführungsform, wenn der Führungsbereich der Kabeleinführungsdichtung gegenüber der Dichtmembrane verdickte Werkstoffbereiche aufweist und die Dichtmenbrane verdünnte Werkstoffbereiche als Durchstoßabschnitte für ein Kabel. Durch die verdickten Werkstoffbereiche wird eine sichere Halterung und Ausrichtung der Kabel erzielt, während die dünnen Membranbereiche eine sichere Abdichtung erzielen, da die Membranbereiche sich an das Kabel anschmiegen können. Bei einem weiteren Ausführungsbeispiel ist das Führungsteil rohrartig ausgebildet zur Aufnahme von im Kabel haltenden Installationsrohr, wobei günstigerweise das rohrartige Führungsteil auf der Seite nach der Dichtmembrane hin einen den Innendurchmesser verkleinernden Anschlag aufweist, der die Einfuhr des Installationsrohres in das Führungsteil begrenzt. Eine sichere Halterung und Ausrichtung des Installationsrohres ist somit gewährleistet. Das Kabel kann genau zur Dichtmembrane geführt werden.

Günstigerweise stehen die einzelnen Kabeleinführungsstutzen auf einer Seite der Platte über Materialbereiche in Verbindung, um so insgesamt eine leichte Herstellung zu erzielen, da wiederum gewährleistet wird, daß beim Spritzvorgang die Materialzufuhr für die Kabeleinführungsdichtung von einer Seite durchgeführt werden kann.

Bei einem weiteren vorteilhaften Ausführungsbeispiel der Erfindung ist wenigstens eine im Kasteninneren vorgesehene Trageschiene mit ihrer Halterung für die Sicherungen, Automaten, Schaltgeräte od.dgl. in unterschiedlichen Höhen bezüglich des Kasteninnenbodens befestigbar, um so die Gewähr zu haben, daß bei Sicherungen oder Automaten, die eine größere Höhe aufweisen, der gleiche Installationsgerätekasten verwendet werden kann, wie bei Sicherungen, die in ihrer Höhe kleiner sind. Hierbei empfiehlt es sich, daß die Trageschiene durch Drehen um 180^{o} Grad in zwei unterschiedliche Höhenstellungen am Kasteninnenboden festlegbar ist. Hierdurch können bei dem gleichen Installationsgerät in einfacher Weise ohne ein Zusatzteil unterschiedlich hohe Sicherungen od.dgl. befestigt werden.

Empfehlenswert ist es, wenn die Trageschiene zum Kasteninnenboden abgewinkelte Befestigungslaschen und/oder Auswölbungen aufweist, die bezüglich der Trageschiene asymmetrisch angeordnet sind und je nach Drehung der Trageschiene in unterschiedliche Lagen des Kastenbodens befestigbar sind, da auf diese Weise eine leichte Befestigung der Trageschiene am Installationsgerätegehäuse möglich ist und zum anderen in einfacher Weise unterschiedliche Befestigungshöhen für die Sicherungen der Automatenschaltgeräte u.dgl. möglich sind.

Um die Verwendbarkeit des Installationsgerät noch weiter zu erhöhen und die Montage weiter zu erleichtern, empfiehlt es sich, daß das Kastengehäuse an seiner unteren Stirnseite einen Lagerraum aufweist zur Unterbringung von einem Sicherungseinsatz, Bedienungsanleitung, Zubehör u.dgl., die für das Bedienungspersonal oder bei der Installation erforderlich sind. Hierbei ist der Lagerraum so angeordnet, daß er den Platz des Inneren des kastenartigen Gehäuses beansprucht, der frei von irgendwelchen Geräten, Verdrahtungen oder Kabel ist. Günstigerweise liegt hierbei der Lagerraum am Gehäuseoberteil, da an diesen keine Zusatzgeräte der Teile befestigt werden.

Um zu verhindern, daß von dem Lagerraum abgelegte Teile zum Inneren des Kastengehäuses gelangen können, ist dieser zum Inneren des Kastengehäuses hin abgeschlossen.

Bei einem ersten Ausführungsbeispiel ist der Lagerraum schubladenartig ausgebildet. hierdurch ergibt sich eine einfache Zugänglichkeit des Lagerraumes.

Bei einem weiteren Ausführungsbeispiel ist der Lagerraum durch einen Deckelteil verschließbar, so daß erst bei Öffnen des Deckelteiles der Lagerraum für den Benutzer frei wird. Hierbei ist es von besonderer Bedeutung, wenn der Deckelteil des Lagerraums nur bei geöffneten die Sicherungen. Automaten, Schaltgeräte u.dgl. abdeckenden Tür geöffnet werden kann, um einen sicheren Schutz zu haben und nicht unbeabsichtigt der Lagerraum zugänglich wird. Hierbei ist zu berücksichtigen, daß die Tür selber des Installationsgerätegehäuses mit dem Gehäuse plombiert oder verriegelt werden kann, so daß unbefugte Personen an das Installationsgerätegehäuse nicht herankommen können. Um die Montage weiter zu vereinfachen, empfiehlt es sich, wenn der den Lagerraum abdeckende Deckelteil über eine Rastverbindung am Gehäuseoberteil festlegbar ist, da hierdurch zum einen eine sichere Befestigung, zum anderen eine einfache Montage gewährleistet ist. Günstig ist hierbei, wenn die Rastverbindung zur Halterung des Deckelteils in der Schließstellung nur bei geöffneter Tür zur Überführung in ihre Freigabestellung zugänglich ist. Eine solche Ausbildung bietet eine einfache Ausbildung der Öffnungssperre. Zur weiteren Vereinfachung der Herstellung empfiehlt es sich, daß der schwenkbare Deckelteil über ein Filmscharnier am Kastenoberteil angeformt ist. Auf diese Weise sind keine besonderen Lagerzapfen oder Lageraufnahmen notwendig, um das Deckelteil hin- und herschwenken zu können.

In der Zeichnung ist der Erfindungsgegenstand in mehreren Ausführungsbeispielen dargestellt und zwar zeigen:
- Fig. 1: eine Seitenansicht des Installationsgerätes,
- Fig. 2: eine Teilseitenansicht im Schnitt und größerem Maßstabe,
- Fig. 3: einen Querschnitt durch das Installationsgerätegehäuse.
- Fig. 4: eine Draufsicht auf das Unterteil des Installationsgerätegehäuse.
- Fig. 5: eine erste Stellung der Trageschiene für die anzuschließenden Geräte,
- Fig. 6: eine zweite Stellung der Trageschiene,
- Fig. 7: eine Draufsicht der Trageschiene gemäß der Stellung nach Fig. 5,
- Fig. 8: eine Teilseitenansicht des Gehäuseoberteiles im Schnitt,
- Fig. 9: ein schwenkbares Deckelteil,
- Fig. 10: das schwenkbare Deckelteil mit Gehäuseoberteil.
- Fig. 11: eine Draufsicht auf die Rückseite einer Platte mit Kabeleinführstutzen,
- Fig. 12: eine Draufsicht auf die Einführseite der Kabeleinführungsplatte nach Fig. 11,
- Fig. 13: ein Schnitt durch die Kabeleinführungsplatte gemäß der Linie XIII - XIII der Fig. 11,
- Fig. 14: die Kabeleinführungsplatte in einem weiteren Ausführungsbeispiel in Teilseitenansicht,
- Fig. 15: die Kabeleinführungsplatte in Richtung auf die einzuführenden Kabel gesehen,
- Fig. 16: einen Schnitt gemäß der Linie XVI - XVI der Fig. 15.
- Fig. 17: einen Schnitt gemäß der Linie XVII - XVII der Fig. 16.

Das Installationsgerät weist ein kastenartiges Gehäuse 20 auf mit einem Kastenunterteil 21 und einem Kastenoberteil 22. In seinem Inneren sind Schaltgeräte, Sicherungen, Automaten und/oder dgl. angeordnet.

Das Kastenoberteil weist eine Tür auf. Diese ist in bekannter Weise schwenkbar am Gehäuseoberteil gelagert und ist in ihrer Schließstellung verriegelbar.Bei Öffnung der Tür sind die Sicherungen, Automaten u.dgl. zugänglich.

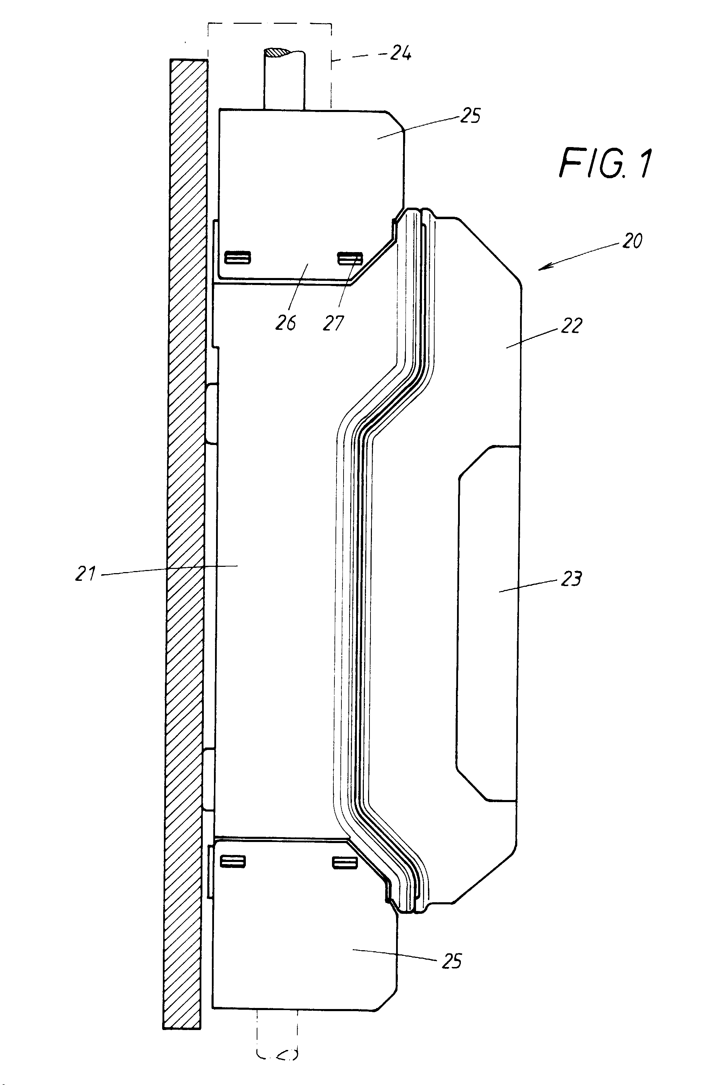

Das elektrische Installationsgerät wird üblicherweise senkrecht, wie in Fig. 1 dargestellt, an eine Wand befestigt. Hierbei kommen entweder von der Ober- oder Unterseite die Kabel zu dem Installationsgerätegehäuse.

Die Kabel können in einem Kabelkanal 24 angeordnet sein, wie in Fig. 1 strichpunktiert dargestellt. Wie aus Fig. 1 noch weiter ersichtlich ist, ist an der Kabeleinführseite ein zusätzliches Abdeckteil 25 vorgesehen. Hierbei wird dieses Zusatzabdeckteil überlicherweise nur an einer Seite und nicht, wie dargestellt, an beiden Seiten angeordnet. Das Zusatzabdeckteil weist Laschen 26 auf, die sich an der Außenseite des Kastenunterteil abstützen. An der Innenseite der Gehäusewand greift eine kleine Lasche des Zusatzabdeckteiles an (nicht dargestellt), so daß die Wandbereiche des Gehäuses U-förmig umgriffen werden. Befestigt wird das Zusatzabdeckteil über eine nicht weiter bezeichnete Rastverbindung 27. Das Zusatzabdeckteil hat die Aufgabe, die ankommenden Kabel abzudecken, darüber hinaus auch bereichsweise die oder den Kabelkanal 24 bzw. Installationsrohre. Zu diesem Zweck weist das Zusatzabdeckteil 25 an der Kabeleinführseite nicht dargestellte, herausbrechbare Teile auf, durch die nach Entfernung ein Einführen der Kabel der Installationsrohre oder der Kabelkanäle in das Innere des Zusatzabdeckteiles möglich ist.

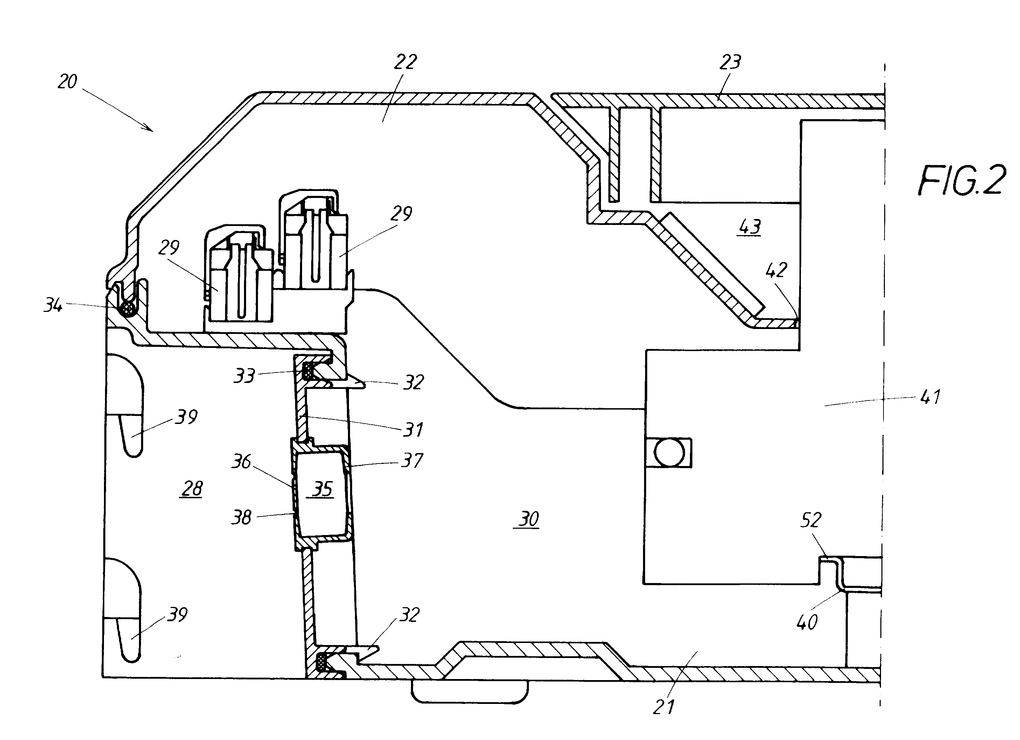

Wie Fig. 2 zeigt, ist das Kastenunterteil mit einem nach der Außenseite offenen Aufnahmeraum 28 versehen, der die Kabelkanäle, Installationsrohre und die Kabel selber aufnimmt. Dieser Aufnahmeraum liegt unterhalb der Anschlußklemmenleisten 29. Die in den Aufnahmeraum 28 liegenden Kabel werden teilweise zu diesen Anschlußklemmenleisten geführt und dort angeschlossen. Es sei hier noch erwähnt, daß der Aufnahmeraum 28 durch das Zusatzabdeckteil 25 noch verlängert wird. In das Zusatzabdeckteil bzw. den Aufnahmeraum können die Installationsrohre sowie Kabelkanäle und Kabel hineinragen. Von dort weiter werden die Kabel in das Innere 30 des Gehäuses geführt. Abgeschlossen wird der Aufnahmeraum durch eine Kabeleinführungsplatte 31. Diese Platte wird mittels einer Rastverbindung 32 an dem Kastenunterteil 21 festgelegt, wobei zwischen der Platte und dem Gehäuse ein Dichtung 33 vorgesehen ist.

Nachzutragen sei hier, daß zwischen Kastenunterteil und Kastenoberteil ebenfalls ein Dichtung 34 vorgesehen ist, so daß eine Abdichtung für das Innere 30 des Gehäuses 20 gewährt ist.

Wie weiter aus Fig. 2 hervorgeht, trägt die Kabeleinführungsplatte 31, wenigstens einen Kabeleinführungsstutzen 35 mit einer Dichtmembrane 36 und einem Führungsteil 37. Hierbei sind die Werkstoffbereiche des Führungsteiles 37 dicker als bei der Dichtmembrane 36. Bei eingeführtem Kabel wird dieses durch das Führungsteil 37 gehalten und zur Membrane ausgerichtet, während die Dichtmembrane 36 sich an den Kabelmantel anschmiegt und abdichtet. Zu diesem Zweck weist die Dichtmembrane verdünnte Werkstoffbereiche 38 auf, durch die eine Sollbruchrinne entsteht, wobei der Durchmesser der Sollbruchstelle in etwa dem Kabeldurchmesser entspricht.

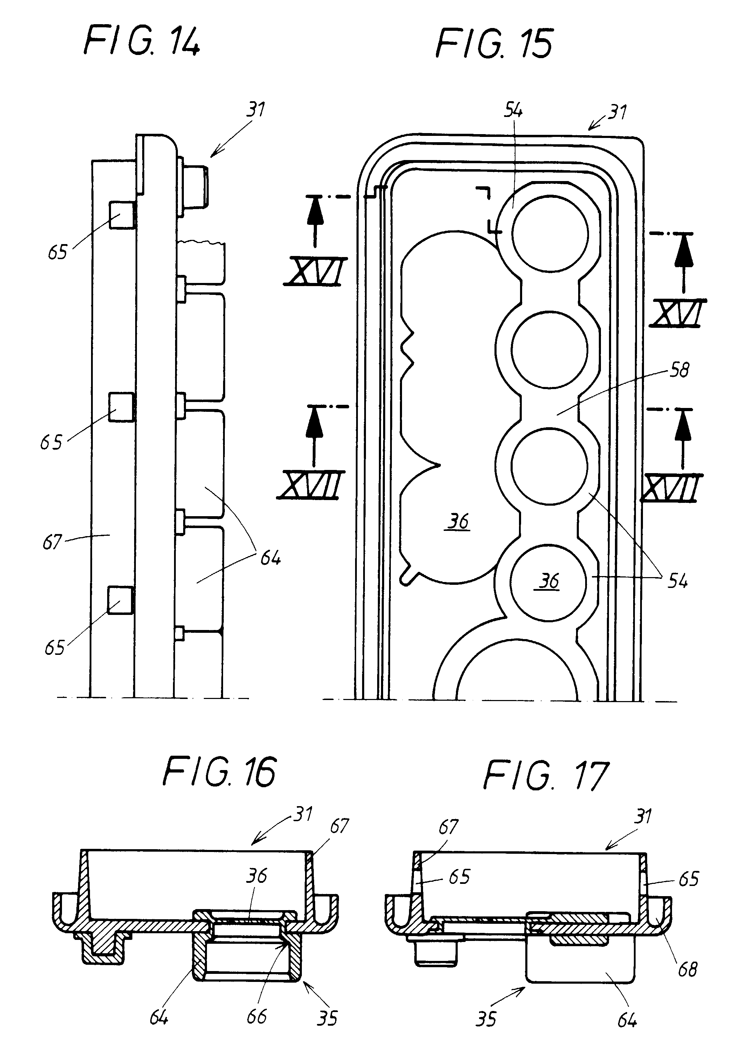

Es sei hier schon darauf hingewiesen, daß die Dichtmembrane 36 nach dem Führungsteil 37 gewölbt sein kann, wie Fig. 13 deutlich erkennen läßt.

Im Aufnahmeraum 28 sind seitlich an den Wänden Ausnehmungen 39 vorgesehen. Diese Ausnehmungen dienen für das Zusatzabdeckteil zur Befestigung und Verbindung mit dem Installationsgehäuse.

Wie weiter aus Fig. 2 noch hervorgeht, weist diese eine Trageschiene 40 auf. Auf diese Trageschiene ist ein Sicherungsautomat 41 befestigt. Er ragt mit einem Abschnitt durch eine Öffnung 42 durch das Kastenoberteil, das an dieser Stelle eine im Querschnitt gesehen V-förmige Ausnehmung 43 aufweist (in Fig. 2 ist lediglich die eine Hälfte des V's dargestellt). Diese V-förmige Ausnehmung wird durch die Tür 23 verschlossen.

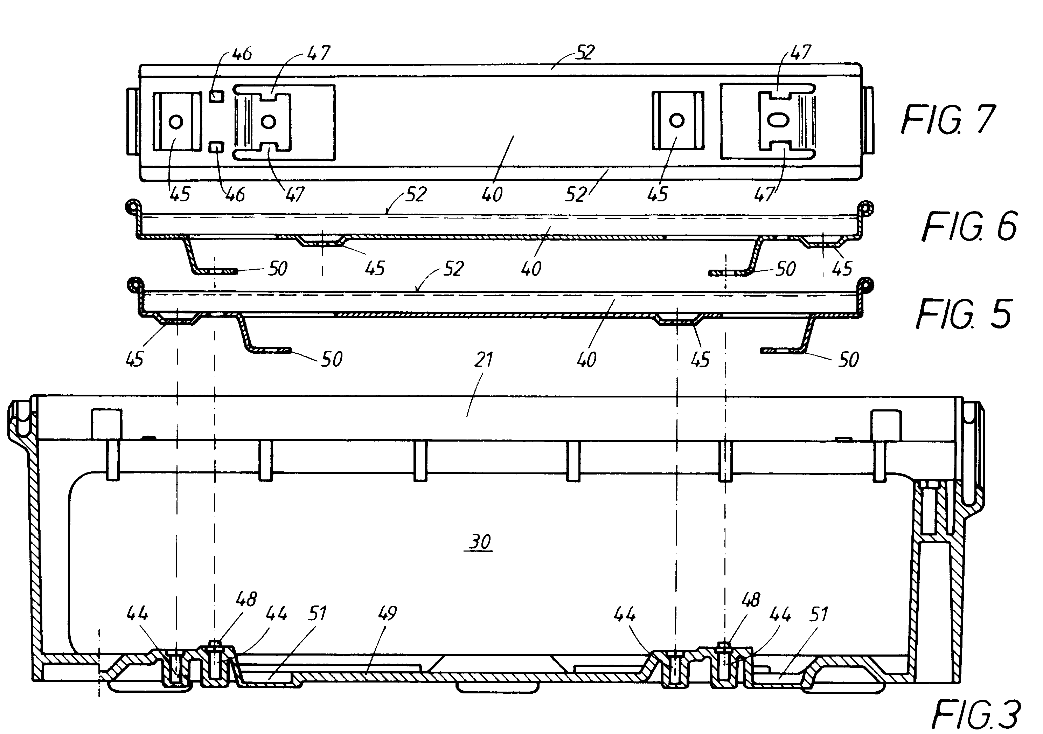

In Fig. 3 ist ein Querschnitt durch das Unterteil 21 des Gehäuses 20 gezeigt und zwar an der Stelle, an der die Trageschienen 40 befestigt werden können. Bei der Stellung der Trageschiene gemäß Fig. 5 sind zwei Schraubaufnahmen 44 im Kastenunterteil vorgesehen, in die selbstschneidende Schrauben eingeschraubt werden. Hierzu weist die Trageschiene 40 eine Vertiefung 45 auf, die auf eine der Schraubaufnahmen 44 zu liegen kommt, wobei dann mittels der Befestigungsschraube die Bohrungsvertiefung 45 durchgriffen wird und dann die Schraube in der Schraubaufnahme 44 verschraubt wird. Um eine genaue Ausrichtung der Trageschiene zu haben, sind noch an der Trageschiene Rechteckausnehmungen 46 und 47 vorgesehen. Diese Rechteckausnehmungen 46 sind als viereckige Durchbrüche ausgebildet, während die Rechteckausnehmungen 47 als Teilrechtecke vorgesehen sind. Diese rechteckigen Ausnehmungen 46 und 47 treten beim Einsetzen in Verbindungen mit entsprechend gestalteten Vorsprüngen 48 am Boden 49 des Kasteninneren 20 in Verbindung. Hierbei tritt in der Stellung gemäß Fig. 5 die Rechteckausnehmung 46 mit dem Vorsprung 48 in Verbindung, während in der Stellung in Fig. 6 der Trageschiene die Rechteckausnehmung 47 mit dem Vorsprung 48 in Verbindung tritt.

Wie aus den Fig. 5 und 6 zu erkennen ist, weist die Trageschiene gegenüber dem Boden 49 abgewinkelte herausgebogene Laschen 50 auf. Diese Lasche 50 kommt in der einen Stellung gemäß Fig. 5 in entsprechende Bodenvertiefungen 51. In der Stellung in Fig. 6 kommen die Laschen auf eine höhere Schraubaufnahme 44 und werden dort zum einen entsprechend mit einer selbstschneidenden Schraube befestigt, zum anderen greifen die Rechteckausnehmungen 47 in die entsprechenden Vorsprünge 48 der einen Schraubaufnahme, so daß auch in dieser Stellung eine sichere Halterung und Ausrichtung der Trageschiene gewährt ist. Durch diese Maßnahme können durch einfaches Umdrehen um 180° Grad der Trageschienen diese in unterschiedliche Höhen vom Boden 49 angeordnet werden, was mit anderen Worten bedeutet, daß die Trageschiene und ihre seitlichen Abwinklungen 52 mit der Sicherung, Automaten, das Schaltgerät näher nach der Tür 23 kommen, tiefer oder niedriger werden können als kleinere ohne Zusatzteil, obwohl ein und die gleichen Mittel vorhanden sind. Größere Gegenstände oder Sicherung können, obwohl ein und die gleichen Mittel vorhanden sind, ohne Zusatzteil tiefer oder niedriger befestigt werden.

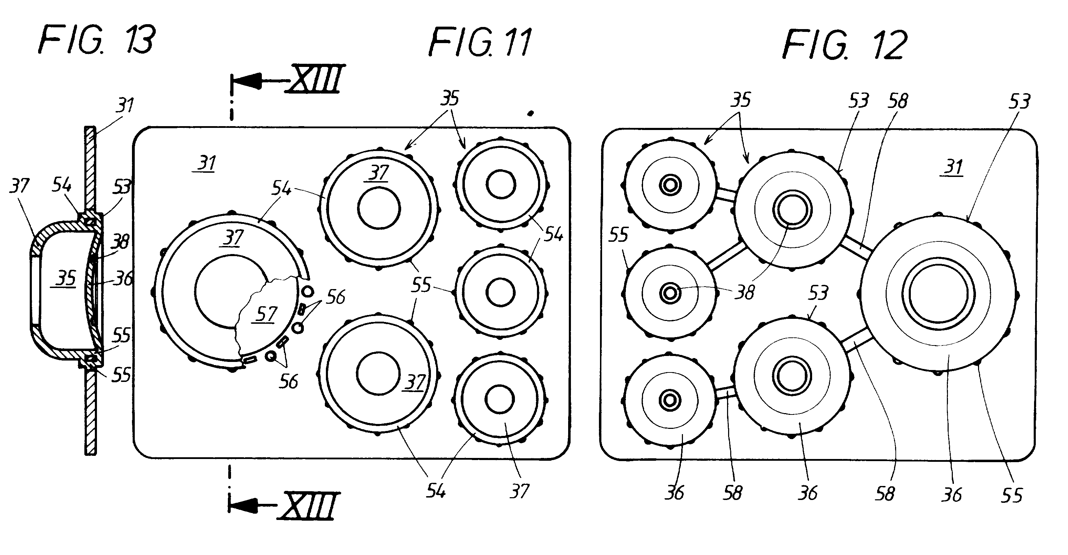

Wie schon erwähnt, ist der Kabeleinführungsstutzen 35 an einer Platte 37 angeordnet. Dies wird in den Fig. 11 bis 13 ausschnittsweise dargestellt. Hierbei können, wie ersichtlich, die Kabeleinführungsstutzen unterschiedliche Größen aufweisen. Die Kabeleinführungsstutzen liegen von beiden Seiten mit einem Flansch 53, 54 auf der Einführseite bzw. der Rückseite der Kabeleinführungsplatte 31 auf. Zwischen den beiden Flanschen verlaufen Materialstege 55, die unterschiedlich geformten Durchbrüche, sei es Rechteckdurchbrüche oder Kreisdurchbrüche, durchgreifen, die um die eigentliche Öffnung 57 angeordnet sind. Hierbei sind Materialstege 55 so dicht aneinander angeordnet, daß beim Einführen der anzuschließenden Kabel die Flansche den Kabeleinführungsstutzen sicher an der Kabeleinführungsplatte 31 Haltern.

Auf der Rückseite sind die einzelnen Flansche der Kabeleinführungsstutzen über Materialbrücken 58 untereinander verbunden. Durch diese Materialbrücken und die Materialstege 55 ergibt sich beim Spritzgußvorgang eine einfache Anspritzung der Kabeleinführungsstutzen 35 an die Kabeleinführungsplatte 31.

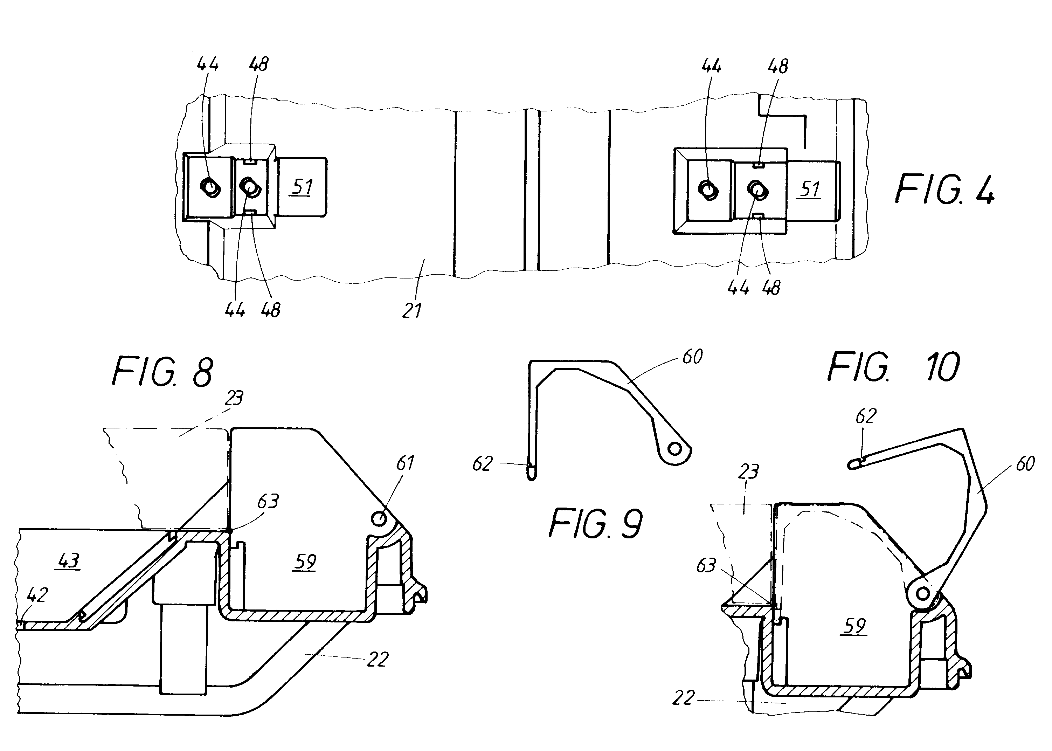

Wie aus Fig. 8 hervorgeht, weist das Kastenoberteil 22 einen Lagerraum 59 auf. Dieser Lagerraum ist unmittelbar dem Kastenoberteil angeformt, wobei er an einer Stelle am Gehäuse vorgesehen ist, die üblicherweise keine Verdrahtungsteile oder Geräte haltert. In dem Lagerraum sollen Ersatzsicherungen, Bedienungsanleitungen oder sonstiges Zubehör, wie Schaltgeräte, Bedienungsanleitungen u.dgl. gelagert werden, die gegebenenfalls von einem Installateur benötigt werden. Verschlossen wird der Lagerraum 59 durch einen V-förmigen Deckelteil 60, der schwenkbar an dem Kastenoberteil 22 angeordnet ist und mit Lagerzapfen in entsprechende Lageraufnahmen 61 am Oberteil 22 im Bereich des Lagerraumes 50 eingreift, vergl. Fig. 8. Dieser rinnenartige V-förmige Deckelteil 60 weist an dem zweiten Schenkel Rasten 62 auf. Diese Rasten greifen in entsprechende Gegenrasten 63 am Oberteil 22 ein, um so den Deckelteil in einer Schließstellung zu haltern. Wie aus Fig. 8 und Fig. 10 hervorgeht (strichpunktiert), ist die Rastverbindung 62,63 des Deckelteiles 60 in der Schließstellung so angeordnet, daß bei geschlossener Tür 23 die Rastverbindung nicht bedienbar bzw. lösbar ist.

In den Fig. 15 bis 17 ist ein weiteres Ausführungsbeispiel der Kabeleinführungsplatte 31 gezeigt. Im Gegensatz zu dem bisherigen Ausführungsbeispiel ist der Kabeleinführungsstutzen 35 derart ausgestaltet, daß statt des Führungsteiles 37 zur Führung und Ausrichtung des Kabels ein Führungsteil 64 vorgesehen ist, das ein Ende des Installationsrohres für das Kabel aufnehmen kann. Im Inneren dieses Führungsteiles 64 ist ein Anschlag 66 vorgesehen, der gewährleistet, daß das Installationsrohr nur bis zur Platte 31 geschoben werden kann. Bei diesem Ausführungsbeispiel wird das Kabel nicht direkt selber zur Dichtmembrane 36 ausgerichtet bzw. gehalten, sondern das Kabel aufnehmende Installationsrohr.

Weiterhin sei noch bemerkt, daß bei diesem Ausführungsbeispiel auch Dichtmembranen 36 ohne Führungsteil vorgesehen sein können, wie Fig. 15 und 17 zeigen.

In diesem Ausführungsbeispiel ist weiterhin dargestellt, wie die Kabeleinführungsplatte 31 mittels der Rastverbindung 32 an dem kastenartigen Gehäuse 20 gehalten ist. Zur Bildung der Rastverbindung 32 weist die Kabeleinführungsplatte 31 einen umlaufenden Rand 67 auf. In diesem Rand sind Öffnungen vorgesehen, die die Rasten 65 für die Rastverbindung 32 bilden. In diese öffnungsartigen Rasten 65 greifen Vorsprünge ein, die an dem kastenartigen Gehäuse 20 vorgesehen sind (nicht dargestellt), wodurch die Kabeleinführungsplatte 31 sicher am Gehäuse 20 gehalten wird. Die Verteilung der Rasten 65 und somit der Gegenrasten ist so gewählt, daß die Kabeleinführungsplatte abdichtend in der Öffnung des kastenartigen Gehäuses eingesetzt werden kann und zwar so, daß die Dichtung 33, die zwischen der Platte 31 und dem Öffnungsrand des Gehäuses 20 vorgesehen ist, gleichmäßig unter Spannung gehalten ist, wenn die Platte 31 eingeschoben ist und befestigt ist. Für die Dichtung ist, wie schon dargestellt, die U-förmige Aufnahme 68 vorgesehen, wobei die Dichtung entweder ein Dichtungsring ist oder in die Aufnahme eingespritzt sein kann.

Weiterhin sei hier noch vorgetragen. daß die Flansche 53 sowie 54 der einzelne Kabeleinführungsstutzen bei enger Anordnung der einzelnen Einführungsöffnungen ineinander übergehen können, wie dieses bei den beiden unteren Kabeleinführungen dargestellt ist. Bei den anderen Flanschen der Kabeleinführungsstutzen sind noch jeweils Materialbereiche 28 vorgesehen. Diese sind jedoch gegenüber denen, die in Fig. 12 gezeigt sind, wesentlich in ihrer Dicke verbreitert. Es sei hier noch erwähnt, daß zwischen den beiden Flanschen durch die Platte 31 hindurchgehende Stege auch bei diesem Ausführungsbeispiel vorhanden sein können. Weiter sei hier noch erwähnt, daß in das Führungsteil 64 ein Installationsrohr eingeschoben werden kann (nicht dargestellt). Dieses stößt mit seinem inneren Ende gegen den Anschlag 66.

Nachzutragen bleibt noch, daß die als Öffnungen ausgebildeten Rasten 65 im gleichmäßigen Abstand rund um die Platte vorgesehen sind, wie dieses Fig. 14 bereichsweise darstellt.

Wie bereits erwähnt, ist die dargestellte Ausführungsform nur eine beispielsweise Verwirklichung der Erfindung. Diese ist nicht darauf beschränkt, vielmehr sind noch mancherlei Abweichungen und Änderungen möglich. So könnte das beschriebene V-förmige Deckelteil statt der Lagerachsen und Lageraufnahmen auch über ein Filmscharnier am Deckeloberteil schwenkbar angeordnet sein. Die Rasten zur Halterung in der Schließstellung könnten so weit und so groß gestaltet sein, daß sie unter der Tür, die die V-förmige Ausnehmung abdeckt, zu liegen kommen, so daß das Deckelteil nur bei geöffneter Tür zugänglich wäre. Weiter sei erwähnt, daß das Zusatzabdeckteil üblicherweise nur an einer Seite angeordnet ist, da meistens von einer Seite lediglich die Kabel herangeführt werden. Die zu dem Zusatzabdeckteil führenden Kabelkanäle könnten sich auch in dem Aufnahmeraum im kastenartigen Gehäuse erstrecken. Weiter könnten auch mehrere Tragschienen vorhanden sein, so daß unterschiedliche Reihen von Sicherungsautomaten u.dgl. angeordnet sein könnten. Hierbei könnte die eine Reihe höher als die andere Reihe angeordnet sein, einfach durch die verschiedenen Anbringungsmöglichkeiten der Trageschiene. Statt des Lagerraumes, der mit dem Deckelteil verschlossen wird, könnte auch eine schubladenförmige Aufnahme zur Unterbringung von Zusatzteilen und Verdrahtungsplänen vorhanden sein. Zum Abschluß sei erwähnt, daß die Kabeleinführungsplatte sowohl Führungsteile für die Kabel als auch Führungsteile für die Kabel als auch Führungsteile für Installationsrohre tragen könnte. Dies können gemeinsam oder wahlweise an der Kabeleinführungsdichtung angeformt sein.

## Patentansprüche

1. Elektrisches Installationsgerät, insbesondere Automatenkasten, Sicherungskasten, Kleinverteilerkasten und/oder dgl.,
mit einem kastenförmigen ein Unterteil (21) und ein oberer Teil (22) aufweisenden kastenförmigen Gehäuse (20),
das in seinem Kasteninneren (30) zur Halterung von Sicherungen. Automaten, Schaltgeräten und/oder dgl. Trageschienen (40) aufweist,
mit im Gehäuseinneren (30) vorgesehenen Anschlußklemmenleisten (29),
mit an wenigstens einer Stirnseite des Gehäuses (20) vorgesehenen Kabeleinführungen,
durch die anzuschließenden Kabel in das Gehäuseinnere (30) führbar sind,
**dadurch gekennzeichnet,**
daß im Bereich der Kabeleinführungen ein nach der Seite der heranzuführenden Kabel offener in Draufsicht auf das Installationsgerät unterhalb einer Anschlußklemmenleiste (29) angeordneten Aufnahmeraum (28) am Gehäuse (20) vorgesehen ist,
der zum Gehäuseinneren (30) durch eine Platte (31) mit Kabeleinführungsdichtungen (35) verschlossen ist,
daß die Kabeleinführungsdichtung (35) aus einem weichen elastischen Kunststoff besteht,
während die Platte (31) aus einem harten Kunststoff, und
daß die Kabeleinführungsdichtungen (35) von beiden Seiten der Platte (31) um eine Durchgangsöffnung (57) in der Platte (31) angespritzt sind.

2. Elektrisches Installationsgerät nach Anspruch 1, dadurch gekennzeichnet, daß der offene Aufnahmeraum (28) durch ein zusätzliches Abdeckteil (25) verlängerbar ist.

3. Elektrisches Installationsgerät nach einem der Ansprüche 1 oder 2, dadurch gekennzeichnet, daß das zusätzliche Abdeckteil (25) bereichsweise in den Aufnahmeraum (28) hineinragt.

4. Elektrisches Installationsgerät nach einem der Ansprüche 1 bis 3, dadurch gekennzeichnet, daß der Zusatzabdeckteil (25) seitlich an das Gehäuse anliegende Laschen (26) aufweist.

5. Elektrisches Installationsgerät nach einem der Ansprüche 1 bis 4, dadurch gekennzeichnet, daß das Abdeckteil (25) zur Seite der heranzuführenden Kabel für deren Kabelkanäle und/oder Kabelrohre herausbrechbare Teile zur bereichsweisen Einfuhr der Kanäle und Rohre aufweist.

6. Elekrisches Installationsgerät nach einem der Ansprüche 1 bis 5, dadurch gekennzeichnet, daß das Abdeckteil (25) mittels einer Rastverbindung (27) am Installationsgehäuse (20) festlegbar ist.

7. Elektrisches Installationsgerät nach einem der Ansprüche 1 bis 6, dadurch gekennzeichnet, daß die Platte (31) mit den Kabeleinführungsdichtungen (35) durch eine Rastverbindung (32) abdichtend im Installationsgerätegehäuseinneren befestigbar ist.

8. Elektrisches Installationsgerät nach Anspruch 7, dadurch gekennzeichnet, daß die Rastverbindung (32) zur Halterung der Kabeleinführungsplatte (31) am Installationsgehäuse (20) aus einer Vielzahl von Rasten (65) und Gegenrasten aufgebaut ist, hierbei sind die Rasten (65) bzw. die Gegenrasten am Rande der abzudichtenden Gehäuseöffnung bzw. der Platte (31) angeordnet.

9. Elektrisches Installationsgerät nach einem der Ansprüche 1 bis 8, dadurch gekennzeichnet, daß die Kabeleinführungsdichtungen (35) stutzenartig ausgebildet sind, hierbei ist die Dichtung auf der einen Seite der Platte als Dichtmembrane (36) und auf der anderen Seite der Platte (11) als Führungsteil (37;64) ausgebildet.

10. Elektrisches Installationsgerät nach Anspruch 9, dadurch gekennzeichnet, daß das Führungsteil (37) zur Halterung und Ausrichtung von einem anzuschließenden Kabel ausgebildet ist, hierbei weist das Führungsteil (37) im Abstand von der Dichtmembrane (36) liegende Werkstoffbereiche auf, die an dem Kabelmantel des Kabels angreifen.

11. Elektrisches Installationsgerät nach Anspruch 10, dadurch gekennzeichnet, daß das Führungsteil (37) rohrartig ausgebildet ist zur Aufnahme von im Kabel halternden Installationsrohr.

12. Elektrisches Installationsgerät nach Anspruch 11, dadurch gekennzeichnet, daß das rohrartige Führungsteil (37) auf der Seite nach der Dichtmembrane (36) hin einen den Innendurchmesser verkleinernden Anschlag (66) aufweist.

13. Elektrisches Installationsgerät nach einem der Ansprüche 1 bis 12, dadurch gekennzeichnet, daß die beiden Seiten der Kabeleinführungsdichtungen (35) über durch die Platte (31) gehende Stege (55) aus weichem Material miteinander verbunden sind.

14. Elektrisches Installationsgerät nach Anspruch 13, dadurch gekennzeichnet, daß die Stege (55) ringartig in Draufsicht auf die Kabeleinführung um diese vorgesehen sind.

15. Elektrisches Installationsgerät nach einem der Ansprüche 1 bis 14, dadurch gekennzeichnet, daß der Führungsteil (37) der Kabeleinführungsdichtung gegenüber der Dichtmembrane (36) verdickte Werkstoffbereiche aufweist.

16. Elektrisches Installationsgerät nach einem der Ansprüche 1 bis 15, dadurch gekennzeichnet, daß die Dichtmembrane (36) verdünnte Werkstoffbereiche aufweist als Durchstoßabschnitt für ein Kabel.

17. Elektrisches Installationsgerät nach einem der Ansprüche 1 bis 16, dadurch gekennzeichnet, daß die einzelnen Kabeleinführungsstutzen (35) auf einer Seite der Kabeleinführungsplatte (31) über Materialbereiche (58) in Verbindung stehen.

18. Elektrisches Installationsgerät nach einem der Ansprüche 1 bis 17. dadurch gekennzeichnet, daß wenigstens eine im Kasteninneren vorgesehene Trageschiene (40) mit ihrer Halterung für die Sicherungen, Automaten, Schaltgeräte od.dgl. ohne Zusatzteile in unterschiedliche Höhen bezüglich des Kastenbodens (59) befestigbar ist.

19. Elektrisches Installationsgerät nach einem der Ansprüche 1 bis 18, dadurch gekennzeichnet, daß die Trageschiene (40) durch Drehen um 180° ohne Zusatzteil Grad in zwei unterschiedlichen Höhenstellungen am Kasteninnenboden (49) festlegbar ist.

20. Elektrisches Installationsgerät nach einem der Ansprüche 1 bis 19, dadurch gekennzeichnet, daß die Trageschiene (40) zum Kasteninnenboden (49) abgewinkelte Befestigungslaschen (50) und/oder Auswölbungen (45) aufweist, die bezüglich der Trageschiene (40) asymmetrisch angeordnet sind und je nach Drehung der Trageschiene (40) in unterschiedlichen Lager (44) des Kastenbodens (49) befestigbar sind.

21. Elektrisches Installationsgerät nach einem der Ansprüche 1 bis 20, dadurch gekennzeichnet, daß das kastenartige Gehäuse (20) an seiner unteren Stirnseite einen Lagerraum (59) aufweist zur Unterbringung von Einsätzen, Sicherungen, Zubehörteilen u.dgl.

22. Elektrisches Installationsgerät nach einem der Ansprüche 1 bis 21, dadurch gekennzeichnet, daß der Lagerraum (59) am Gehäuseoberteil (22) angeordnet ist.

23. Elektrisches Installationsgerät nach einem der Ansprüche 1 bis 22, dadurch gekennzeichnet, daß der Lagerraum (59) zum Inneren (30) des kastenartigen Gehäuses (20) hin abgeschlossen ist.

24. Elektrisches Installationsgerät nach einem der Ansprüche 1 bis 23, dadurch gekennzeichnet, daß der Lagerraum (59) schubladenartig ausgebildet ist.

25. Elektrisches Installationsgerät nach einem der Ansprüche 1 bis 24, dadurch gekennzeichnet, daß der Lagerraum (59) durch ein Deckelteil (60) verschließbar ist.

26. Elektrisches Installationsgerät nach einem der Ansprüche 1 bis 25, dadurch gekennzeichnet, daß der Lagerraum (59) nur bei geöffneter Sicherungen, Automaten, Schaltgeräten od.dgl. abdeckender Tür (23) zugänglich ist.

27. Elektrisches Installationsgerät nach einem der Ansprüche 1 bis 26, dadurch gekennzeichnet, daß der Deckelteil (60) über eine Rastverbindung (62,63) am Gehäuseoberteil festlegbar ist.

28. Elektrisches Installationsgerät nach Anspruch 27, dadurch gekennzeichnet, daß die Rastverbindung (62,63) zur Halterung des Deckelteils (60) in der Schließstellung nur bei geöffneter Tür (23) zur Überführung in ihre Freigabestellung zugänglich ist.

29. Elektrisches Installationsgerät nach einem der Ansprüche 1 bis 28, dadurch gekennzeichnet, daß der schwenkbare Deckelteil (60) über ein Filmscharnier am Kastenoberteil (22) angeformt ist.

## Claims

1. Electrical installation device, in particular miniature circuit-breaker boxes, fuse boxes, small distributor boxes and/or the like,
with a box-shaped housing (20) which has a bottom section (21) and a top section (22),
and which has, in its interior (30), holding rails (40) for holding fuses, miniature circuit-breakers, switching devices and/or the like,
with terminal strips (29) provided in the housing interior (30),
with cable inlets provided on at least one front end of the housing (20),
and through said inlets the cables to be connected can be passed into the housing interior (30).
characterised in that
in the area of the cable inlets, an accommodating chamber (28) is provided on the housing (20), said chamber being open on the side of the cables to be introduced and being arranged, in a top view of the installation device, underneath a terminal strip (29),
said chamber being sealed from the housing interior (30) by a plate (31) with cable inlet seals (35),
that the cable inlet seal (35) is made of a soft elastic plastic,
whereas the plate (31) is made of a hard plastic, and
that the cable inlet seals (35) are injection-moulded from both sides of the plate (31) around a through-opening (57) in the plate (31).

2. Electrical installation device according to claim 1, characterised in that the open accommodating chamber (28) can be extended by an additional cover section (25).

3. Electrical installation device according to one of claims 1 and 2, characterised in that the additional cover section (25) protrudes in parts into the accommodating chamber (28).

4. Electrical installation device according to one of claims 1 to 3, characterised in that the additional cover section (25) has lugs (26) resting against the side of the housing.

5. Electrical installation device according to one of claims 1 to 4, characterised in that the cover section (25) has, on the side of the cables to be introduced, parts which can be broken out for the ducts and/or conduits of said cables for the introduction of sections of the cables and conduits.

6. Electrical installation device according to one of claims 1 to 5, characterised in that the cover section (25) can be fixed on the installation housing (20) by means of a catch connection (27).

7. Electrical installation device according to one of claims 1 to 6, characterised in that the plate (31) can be fastened with the cable inlet seals (35) by means of a catch connection (32) in the installation device housing interior to act as a seal.

8. Electrical installation device according to claim 7, characterised in that the catch connection (32) is made up of a multiplicity of catches (65) and mating catches to hold the cable inlet plate (31) on the installation housing (20), said catches (65) and the mating catches being arranged on the edge of the housing opening or plate (31) to be sealed.

9. Electrical installation device according to one of claims 1 to 8, characterised in that the cable inlet seals (35) are designed like nozzles, the seal on the one side of the plate being designed as a sealing membrane (36) and on the other side of the plate (11) as a guide element (37; 64).

10. Electrical installation device according to claim 9, characterised in that the guide element (37) is designed to hold and align a cable to be connected, the guide element (37) exhibiting material sections located at a distance from the sealing membrane (36), said sections gripping the sheath of the cable.

11. Electrical installation device according to claim 10, characterised in that the guide element (37) is designed like a pipe to accommodate an installation pipe holding the cable.

12. Electrical installation device according to claim 11, characterised in that the pipe-like guide element (37) exhibits a stop (66) which reduces the inside diameter on the side towards the sealing membrane (36).

13. Electrical installation device according to one of claims 1 to 12, characterised in that the two sides of the cable inlet seals (35) are connected to each other by webs (55), which are made of soft material and pass through the plate (31).

14. Electrical installation device according to claim 13, characterised in that the webs (55) are arranged, in a top view of the cable inlet, in a ring shape around said inlet.

15. Electrical installation device according to one of claims 1 to 14, characterised in that the guide element (37) of the cable inlet seal exhibits thick material sections opposite the sealing membrane (36).

16. Electrical installation device according to one of claims 1 to 15, characterised in that the sealing membrane (36) exhibits thin material sections as a penetration area for a cable.

17. Electrical installation device according to one of claims 1 to 16, characterised in that the individual cable inlet nozzles (35) are connected on one side of the cable inlet plate (31) by means of material sections (58).

18. Electrical installation device according to one of claims 1 to 17, characterised in that at least one holding rail (40) provided in the box interior can be fastened with its holder for the fuses, miniature circuit-breakers, switching devices and the like without additional components at different heights relative to the box bottom (59).

19. Electrical installation device according to one of claims 1 to 18, characterised in that the holding rail (40) can be fixed at two different height positions on the box inner bottom (49) by turning it through 180° without additional components.

20. Electrical installation device according to one of claims 1 to 19, characterised in that the holding rail (40) has attachment lugs (50) at an angle to the box inner bottom (49) and/or bulges (45) which are arranged asymmetrically relative to the holding rail (40) and, depending on how the holding rail (40) is turned, can be fastened in different positions (44) of the box bottom (49).

21. Electrical installation device according to one of claims 1 to 20, characterised in that the box-shaped housing (20) has, on its lower end, a storage space (59) on its bottom end to accommodate inserts, fuses, accessories and the like.

22. Electrical installation device according to one of claims 1 to 21, characterised in that the storage space (59) is arranged on the housing upper section (22).

23. Electrical installation device according to one of claims 1 to 22, characterised in that the storage space (59) is sealed relative to the interior (30) of the box-like housing (20).

24. Electrical installation device according to one of claims 1 to 23, characterised in that the storage space (59) is designed like a drawer.

25. Electrical installation device according to one of claims 1 to 24, characterised in that the storage space (59) can be closed by means of a cover component (60).

26. Electrical installation device according to one of claims 1 to 25, characterised in that the storage space (59) is only accessible when the door (23) covering fuses miniature circuit-breakers, switching devices and the like is open.

27. Electrical installation device according to one of claims 1 to 26, characterised in that the cover component (60) can be fixed to the housing upper section by means of a catch connection (62, 63).

28. Electrical installation device according to claim 27, characterised in that the catch connection (62, 63) for holding the cover component (60) in the closed position is only accessible with the door (23) open to move it into its release position.

29. Electrical installation device according to one of claims 1 to 28, characterised in that the swivel-type cover component (60) is moulded to the box upper section (22) by means of a film hinge.

## Revendications

1. Appareil d'installation électrique, en particulier boîte à automates, boîte à fusibles, petite boîte de distribution et/ou assimilées,
avec un boîtier (20) en forme de caisson équipé d'une partie inférieure (21) et d'une partie supérieure (22),
ce boîtier (20) présentant à l'intérieur (30) du caisson des rails porteurs (40) servant de fixation à des fusibles, automates appareils commutateurs et/ou assimilés,
avec des barrettes à bornes de raccordement (29) prévues à l'intérieur du boîtier (30),
avec des moyens d'introduction des câbles prévus contre au moins une face frontale du boîtier (20),
par lesquels moyens les câbles à brancher peuvent être conduits à l'intérieur du boîtier (30),
**caractérisé en ce que**
dans la zone d'introduction des câbles, un compartiment-logement (28) est prévu contre le boîtier (20), en aval du côté des câbles à approcher, ce compartiment, appareil vu de dessus, étant ouvert en-dessous d'une barrette à bornes de raccordement (29),
ce compartiment-logement (28) étant obturé par rapport à l'intérieur du boîtier (30) par une plaque (31) au moyen de joints (35) d'introduction de câbles,
en ce que le joint (35) d'introduction de câble est formé d'une matière plastique élastique molle,
tandis que la plaque (31) est en matière plastique dure, et
en ce que les joints (35) d'introduction de câble ont été injectés des deux côtés de la plaque (31) autour d'une ouverture de passage (57) ménagée dans ladite plaque (31).

2. Appareil d'installation électrique selon la revendication 1, caractérisé en ce que le compartiment-logement (28) ouvert est rallongeable par une pièce de couverture (25) supplémentaire.

3. Appareil d'installation électrique selon l'une des revendications 1 ou 2, caractérisé en ce que certaines parties de la pièce de couverture (25) supplémentaire font saillie à l'intérieur du compartiment-logement (28).

4. Appareil d'installation électrique selon l'une des revendications 1 à 3, caractérisé en ce que la pièce de couverture (25) supplémentaire présente des pattes (26) appliquant latéralement contre le boîtier.

5. Appareil d'installation électrique selon l'une des revendications 1 à 4, caractérisé en ce que la pièce de couverture (25) présente, du côté où se trouvent les câbles à faire rentrer, des pièces amovibles par cassure permettant la pénétration d'une partie des canalisations et tuyaux transportant ces câbles.

6. Appareil d'installation électrique selon l'une des revendications 1 à 5, caractérisé en ce que la pièce de couverture (25) est immobilisable contre le boîtier d'installation (20) au moyen d'une jonction crantée (27).

7. Appareil d'installation électrique selon l'une des revendications 1 à 6, caractérisé en ce que la plaque (31) comportant des joints (35) d'introduction de câble peut se fixer de manière étanche à l'intérieur du boîtier de l'appareil d'installation par une jonction crantée (32).

8. Appareil d'installation électrique selon la revendication 7, caractérisé en ce que la jonction crantée (32) servant à retenir la plaque (31) d'introduction de câbles contre le boîtier d'installation (20) est formée par un grand nombre de crans (65) et crans antagonistes, lesdits crans (65) et crans antagonistes étant disposés sur le bord de l'orifice à étancher du boîtier et de la plaque (31).

9. Appareil d'installation électrique selon l'une des revendicaions 1 à 8, caractérisé en ce que les joints (35) d'introduction de câbles sont en forme de manchons, le joint étant configuré en membrane d'étanchéité (36) d'un côté de la plaque (11) et en pièce-guide (37; 64) de l'autre côté de la plaque (11).

10. Appareil d'installation électrique selon la revendication 9, caractérisé en ce que la pièce-guide (37) est configurée pour retenir et orienter un câble à raccorder, cette pièce-guide (37) présentant, à une certaine distance de la membrand d'étanchéité (36), des parties de sa matière attaquant la gaine du câble.

11. Appareil d'installation électrique selon la revendication 10, caractérisé en ce que la pièce-guide (37) est configurée en tuyau pour recevoir un tuyau d'installation contenant un câble.

12. Appareil d'installation électrique selon la revendication 11, caractérisé en ce que la pièce-guide (37) configurée en tuyau présente, du côté s'éloignant de la membrane d'étanchéité (36), une butée (66) réduisant le diamètre intérieur.

13. Appareil d'installation électrique selon l'une des revendications 1 à 12, caractérisé en ce que les deux côtés des joints (35) d'introduction de câble sont reliés entre eux par des nervures (55) en matériau mou traversant la plaque (31).

14. Appareil d'installation électrique selon la revendication 13, caractérisé en ce que les nervures (55) ont, introduction des câbles vue de dessus, la forme d'anneaux prévus autour de cette introduction.

15. Appareil d'installation électrique selon l'une des revendications 1 à 14, caractérisé en ce que la matière constitutive de la pièce-guide (37) formant le joint d'introduction de câble présente, par rapport à la membrane d'étanchéité (36), des zones plus épaisses.

16. Appareil d'installation électrique selon l'une des revendications 1 à 15, caractérisé en ce que la matière constitutive de la membrane d'étanchéité (36) présente des zones plus minces perforables pour laisser passer un câble.

17. Appareil d'installation électrique selon l'une des revendications 1 à 16, caractérisé en ce que les divers manchons (35) d'introduction de câble sont reliés entre eux sur un côté de la plaque (31) d'introduction de câble par des segments de matière (58).

18. Appareil d'installation électrique selon l'une des revendications 1 à 17, caractérisé en ce qu'au moins un rail porteur (40) prévu à l'intérieur de la boîte et équipé de sa fixation pour fusibles, automates, appareils de commutation ou assimilés, est fixable sans accessoires supplémentaires à diverses hauteurs par rapport au fond (59) de la boîte.

19. Appareil d'installation électrique selon l'une des revendications 1 à 18, caractérisé en ce que le rail porteur (40) est immobilisable sans accessoire supplémentaire, par rotation à 180°, à deux hauteurs différentes contre le fond intérieur (49) de la boîte.

20. Appareil d'installation électrique selon l'une des revendications 1 à 19, caractérisé en ce que le rail porteur (40) présente des pattes de fixation (50) incurvées vers le fond intérieur (49) de la boîte et/ou des voûtes (45) disposées asymétriquement par rapport au rail porteur (40) et qui, suivant la rotation de ce rail porteur (40), sont fixables dans plusieurs paliers (44) équipant le fond de la boîte (49).

21. Appareil d'installation électrique selon l'une des revendications 1 à 20, caractérisé en ce que le boîtier (20) en forme de caisson présente contre sa face frontale inférieure un compartiment de stockage (59) servant à loger des inserts, fusibles, des accessoires et assimilés.

22. Appareil d'installation électrique selon l'une des revendications 1 à 21, caractérisé en ce que le compartiment de stockage (59) est disposé contre la partie supérieure (22) du boîtier.

23. Appareil d'installation électrique selon l'une des revendications 1 à 22, caractérisé en ce que compartiment de stockage (59) est obturé en direction de l'intérieur (30) du boîtier (20) en forme de caisson.

24. Appareil d'installation électrique selon l'une des revendications 1 à 23, caractérisé en ce que le compartiment de stockage (59) est configuré en tiroir.

25. Appareil d'installation électrique selon l'une des revendications 1 à 24, caractérisé en ce que le compartiment de stockage (59) est obturable par une pièce-couvercle (60).

26. Appareil d'installation électrique selon l'une des revendications 1 à 25, caractérise en ce que le compartiment de stockage (59) n'est accessible que lorsque la porte (23) recouvrant les fusibles, automates, appareils commutateurs ou assimilés est ouverte.

27. Appareil d'installation électrique selon l'une des revendications 1 à 26, caractérise en ce que la pièce-couvercle (60) est immobilisable par une jonction crantée (62, 63) située contre la partie supérieure du boîtier.

28. Appareil d'installation électrique selon la revendication 27, caractérisé en ce que la jonction crantée (62, 63) servant à fixer la pièce couvercle (60) en position de fermeture n'est accessible que porte ouverte (23) pour passer en position d'ouverture.

29. Appareil d'installation électrique selon l'une des revendications 1 à 28, caractérisé en ce que la pièce-couvercle pivotante (60) est moulée contre la partie supérieure (22) de la boîte par le biais d'une bande mince servant de charnière.
